# EUROPÄISCHE PATENTANMELDUNG

(11) **EP 4 840 840 A1**
(43) Veröffentlichungstag der Anmeldung: **18.11.2026**
(21) Anmeldenummer: 25176243.1
(22) Anmeldetag: 14.05.2025
(51) Int. Cl.: C05F 17/70, C05F 17/993, F26B 11/22

(54) **VERFAHREN ZUR BEHANDLUNG EINES ORGANIKHALTIGEN MATERIALS SOWIE BEARBEITUNGSMASCHINE UND BEARBEITUNGSSYSTEM HIERZU**

(71) Anmelder: Kompoferm GmbH, 33428 Marienfeld (DE)
(72) Erfinder: EGGERSMANN, Karlgünter, 33428 Marienfeld (DE)
(74) Vertreter: Schober, Mirko

(57) **Zusammenfassung**

Bei einem Verfahren zur aeroben Behandlung eines schichtbaren organikhaltigen Materials (M) mit einer Bearbeitungsmaschine (PM), vorzugsweise mobile Umsetzmaschine, oder einem eine solche Bearbeitungsmaschine (PM) umfassenden Bearbeitungssystem, bei dem auf Basis von Daten (DM, EDA, WR, HD, WD, T, H, S, WL, GPS, D) zumindest eine die Behandlung des Materials (M) betreffende Maßnahme abgeleitet wird, wird/ werden die so abgeleitete/n Maßnahme/n in Form eines durchzuführenden Auftrags (O) an eine Maschinensteuerung (MC) der Bearbeitungsmaschine (PM) übermittelt und die Durchführung der Maßnahme/n durch die Bearbeitungsmaschine (PM) erfolgt wenigstens teilweise automatisch, bevorzugt vollautomatisch.

## Beschreibung

Die Erfindung betrifft ein Verfahren zur aeroben Behandlung eines schichtbaren organikhaltigen Materials mit einer Bearbeitungsmaschine, vorzugsweise mobilen Umsetzmaschine, oder einem eine solche Bearbeitungsmaschine umfassenden Bearbeitungssystem gemäß den Merkmalen von Anspruch 1. Weiterhin betrifft die Erfindung eine Bearbeitungsmaschine zur Durchführung des Verfahrens mit den Merkmalen von Anspruch 7 sowie ein Bearbeitungssystem zur Durchführung des Verfahrens mit einer, insbesondere dieser Bearbeitungsmaschine mit den Merkmalen von Anspruch 9.

Die industrielle Behandlung organischen Materials sieht u.a. dessen kontrollierte Kompostierung vor, um diese beispielsweise als Dünger nutzen zu können. Weitere industrielle Behandlungen werden auch bei der Erdsanierung oder der Abfalltrockung eingesetzt. Eine solche Behandlung erfordert eine präzise Prozesssteuerung, um einen optimalen Prozessverlauf sowie größtmögliche Prozesssicherheit gewährleisten zu können. Als entscheidende Prozessparameter sind unter anderem die Temperatur sowie die Feuchte des jeweiligen Materials zu nennen. Weitere Prozessparameter sind beispielsweise der vorhandene Gehalt an Sauerstoff (O₂) sowie durch die Verrottung entstehende Prozessgase, wie etwa Kohlendioxid (CO₂) oder Methan (CH₄). Ergänzende Prozessparameter sind die Homogenisierung der Struktur des jeweiligen Materials sowie dessen Reduktion durch Trocknung und Rotteschwund, was den Verlust an Volumen und Masse meint.

Üblicherweise wird das jeweilige Material zunächst in Form von sogenannten Mieten geschichtet oder gestapelt, um dessen möglichst platzsparende und einfach zu handhabende Lagerung zu ermöglichen. Bereits zu Beginn und während seiner Behandlung werden diverse Prozessdaten mit geeigneten Sensoren erfasst und z.B. in einem Materialmanager zusammengefasst. Auf deren Basis und im Abgleich mit historischen Daten werden im weiteren Verlauf die Behandlung des Materials betreffende Maßnahmen abgeleitet. Anschließend wird ein Auftrag erstellt, welcher wenigstens eine als notwendig und/oder sinnvoll erachtete Behandlung enthält. Zur Durchführung des Auftrags wird dieser anschließend manuell an eine die Bearbeitungsmaschine bedienende Person übergeben. Die Person führt die im Auftrag enthaltene/n Behandlung/en dann manuell mit der Bearbeitungsmaschine entweder direkt aus oder passt diese zunächst an die tatsächlichen Bedingungen vor Ort an, nachdem sie aktuelle Prozessdaten in Form wenigstens eines Ist-Werts durch einen oder mehrere Sensoren erfasst. Nach Durchführung des Auftrags erstellt die Person ein entsprechendes Protokoll hierüber, welches in den Materialmanager eingepflegt wird.

Das bisherige Verfahren zur Behandlung derartiger Materialien basiert in Teilen auf der Erfahrung der die Bearbeitungsmaschine bedienenden Person. Insbesondere deren Anpassung des jeweiligen Auftrags oder gar etwaige Versäumnisse führen zu nicht optimalen Ergebnissen und/oder verlängern den für die jeweilige Behandlung notwendigen Zeitraum.

Der vorliegenden Erfindung liegt daher die Aufgabe zugrunde, ein Verfahren zur aeroben Behandlung eines schichtbaren organikhaltigen Materials mit einer Bearbeitungsmaschine sowie eine solche Bearbeitungsmaschine und ein eine Bearbeitungsmaschine umfassendes Bearbeitungssystem dahingehend weiterzuentwickeln, dass die die Behandlung des Materials betreffenden Maßnahmen besser erkannt und durchgeführt werden können, um eine insgesamt optimierte Behandlung des Materials zu erreichen.

Die Aufgabe wird durch ein Verfahren mit den Merkmalen von Anspruch 1, eine Bearbeitungsmaschine mit den Merkmalen von Anspruch 7 und durch ein Bearbeitungssystem mit den Merkmalen von Anspruch 9 gelöst. Vorteilhafte Weiterbildungen sind Gegenstand der jeweils abhängigen Ansprüche.

Erfindungsgemäß wird vorgeschlagen, dass die auf Basis von Daten abgeleitete/n und die Behandlung des Materials betreffende/n Maßnahme/n in Form eines durchzuführenden Auftrags an eine Maschinensteuerung der Bearbeitungsmaschine übermittelt wird/werden, woraufhin die Durchführung der Maßnahme/n durch die Bearbeitungsmaschine wenigstens teilweise automatisch, bevorzugt vollautomatisch, erfolgt. Mit anderen Worten ist die Bearbeitungsmaschine auf Basis der Daten somit selbst in der Lage, sowohl zu erkennen, welche Maßnahme im jeweiligen Moment erforderlich und/oder optimal ist, als auch diese automatisch umzusetzen. Der sich hieraus ergebende Vorteil ist darin zu sehen, dass die jeweilige Entscheidung nun nicht mehr bedienergeführt und insofern manuell getroffen wird, sondern automatisch.

Nach einer bevorzugten Weiterbildung des grundsätzlichen Erfindungsgedankens kann die automatische Durchführung der im Auftrag enthaltenen Maßnahme/n erst nach einer vorherigen manuellen Freigabe erfolgen. Auf diese Weise bildet eine Person die letzte Instanz, welche die automatisch getroffene und zur automatischen Ausführung anstehende Maßnahme bestätigt oder aus etwaigen Gründen ablehnt. Auf diese Weise ist ein überaus hohes Maß an Sicherheit in Bezug auf den Prozessablauf erreichbar.

Die Erfindung sieht vor, dass der, insbesondere jeweilige, Auftrag an die Maschinensteuerung durch eine Materialmanagementsoftware erstellt wird. Hierzu ist die Materialmanagementsoftware dazu eingerichtet, wenigstens eine, vorzugsweise alle, der folgenden Aufgaben zu erfüllen:
- Archivierung aktueller Daten, insbesondere mindestens eines durch wenigstens einen Sensor erfassten Ist-Werts eines Prozessparameters;
- Archivierung historischer Daten, insbesondere mindestens eines durch wenigstens einen Sensor erfassten älteren Ist-Werts eines Prozessparameters;
- Auswertung und/oder Vergleich aktueller Daten und historischer Daten, insbesondere zum Zwecke der Ableitung einer Maßnahme;
- Berücksichtigung aktueller und/oder prognostizierter Wetterdaten, insbesondere zum Zwecke der Ableitung einer Maßnahme;
- Archivierung von das jeweilige Material betreffenden Daten, insbesondere Materialart und/oder Materialmenge und/ oder Materialdichte;
- Archivierung und ggf. Berücksichtigung von den Daten zugehörigen Daten in Form von Metadaten, insbesondere Erfassungsdatum und/oder Erfassungsort und/oder Sensortyp und/ oder Messauflösung und/oder Messeinheit und/oder Kalibrierungsstatus und/oder Messmethode und/oder Umgebungsbedingungen und/oder Datenquelle und/oder durchgeführte Handlung;
- gesetzeskonforme Dokumentation von Daten, vorzugsweise mindestens der jeweiligen Temperatur des Materials, insbesondere mitsamt den zugehörigen Metadaten;
- Ableitung einer Maßnahme, insbesondere auf Basis der Daten, mittels einer festgelegten Logik;
- Ableitung einer Maßnahme, insbesondere auf Basis der Daten, mittels eines lernfähigen Algorithmus und/oder künstlicher Intelligenz, insbesondere anhand einer Verknüpfung und/oder Auswertung historischer Daten im Zusammenhang mit historischen Handlungen;
- Ableitung einer nur einen Teil des Materials betreffenden Maßnahme, insbesondere auf Basis der Daten, aufgrund einer erkannten Prozessabweichung;
- Prognose des Behandlungsfortschritts des Materials durch Erfassen seines Volumens oder/und seiner Masse durch einen Sensor;
- Vorhersage der Verfügbarkeit des endbehandelten Materials durch Erfassen seines Volumens oder/und seiner Masse durch einen Sensor;
- Verwaltung eines zur temporären Lagerung des Materials vorgesehenen Bereichs, insbesondere Platzmanagement;
- Planung anstehender Behandlungen des Materials, insbesondere auf Basis der zugehörigen Daten;
- Planung der Logistik des Materials betreffenden Prozesse, insbesondere in Bezug auf den Transport und/oder die Lagerung und/oder die Verteilung des Materials;
- Protokollierung des durchgeführten Auftrags oder der durchgeführten Aufträge.

Auf diese Weise kann die Materialmanagementsoftware in vorteilhafter Weise die bisherige Funktion des Materialmanagers in sich vereinen und direkt etwaige Aufträge an die Maschinensteuerung übermitteln, ohne dass es hierfür einer wie zuvor manuellen Übergabe des jeweiligen Auftrags an eine die Bearbeitungsmaschine bedienende Person bedarf.

In besonders bevorzugter Weise kann die Maschinensteuerung eine Regelung umfassen. Weiter kann die Maschinensteuerung dann dazu eingerichtet sein, wenigstens eine, vorzugsweise alle der folgenden Aufgaben automatisiert zu erfüllen:
- Umsetzung wenigstens eines Teils des Materials;
- Bewässerung wenigstens eines Teils des Materials;
- autonome Bewegung der Bearbeitungsmaschine;
- Verarbeitung von der jeweiligen Position der Bearbeitungsmaschine betreffenden Informationen;
- Verarbeitung von Form und/oder Abmessungen des geschichteten Materials betreffenden Informationen;
- Vermeidung einer Kollision der Bearbeitungsmaschine mit dem Material und/oder einem deren Einsatz betreffenden Gegenstand;
- Anpassung der Fahrgeschwindigkeit der Bearbeitungsmaschine;
- Anpassung der Drehzahl eines zur Umsetzung des Materials dienenden Rotors der Bearbeitungsmaschine
- Anpassung weiterer Maschinenparameter, insbesondere Anpassung der Höhe des Rotors der Bearbeitungsmaschine oder Anpassung der Stellung der Heckklappe der Bearbeitungsmaschine zur Variation des Materialauswurfs.

Gemäß einer weiteren besonders bevorzugten Ausgestaltung des erfindungsgemäßen Verfahrens kann die oder wenigstens eine der im an die Maschinensteuerung übermittelten Auftrag enthaltene/n Maßnahme/n während der Durchführung des Auftrags durch die Bearbeitungsmaschine auf Basis von durch wenigstens einen Sensor erfassten Daten dynamisch angepasst werden. Dies kann in vorteilhafter Weise durch eine entsprechende Regelung der Maschinensteuerung erfolgen. Hierdurch ergibt sich ein perfektes Zusammenspiel aus den innerhalb der Materialmanagementsoftware abgeleiteten und in einem Auftrag an die Maschinensteuerung zusammengefassten Maßnahmen und den tatsächlichen, aktuell vorliegenden Prozessdaten, um stets optimale Entscheidungen in Bezug auf die durchzuführenden Maßnahmen und die sich daraus ergebenden Ergebnisse zu erzielen.

Im Rahmen der Erfindung ist vorgesehen und wird als vorteilhaft angesehen, dass auf Basis einer Auswertung der Daten eine Anomalie in Bezug auf den aktuellen Behandlungszustand des Materials erkannt und eine die weitere Behandlung des Materials betreffende Maßnahme abgeleitet werden kann.

Das nunmehr vorgestellte erfindungsgemäße Verfahren ermöglicht eine weitaus bessere Erkennung und Durchführung der die Behandlung des Materials betreffenden Maßnahmen, so dass eine insgesamt optimale Behandlung des Materials erreicht wird.

Weiter ist die Erfindung auf eine Bearbeitungsmaschine gerichtet, welche insbesondere zur Durchführung des erfindungsgemäßen Verfahrens dienen kann. Die erfindungsgemäße Bearbeitungsmaschine umfasst wenigstens einen der nachfolgenden onboard-Sensoren:
- Sensor zur Messung der Temperatur des Materials;
- Sensor zur Messung der Feuchte des Materials;
- Sensor zur Messung des Anteils eines Prozessgases innerhalb oder im Bereich des Materials, insbesondere Kohlendioxid (CO₂) und/oder Sauerstoff (O₂) und/oder Ammoniak (NH₃) und/oder Methan (CH₄);
- Sensor, insbesondere 2D-Laser, zur vorzugsweise optischen Messung des Querschnitts und/oder Volumens des geschichteten Materials;
- Sensor zur vorzugsweise optischen Messung der Korngröße des geschichteten Materials;
- Sensor zur vorzugsweise optischen Messung der Homogenität des geschichteten Materials.

Der sich aus der erfindungsgemäßen Bearbeitungsmaschine ergebende Vorteil wurde bereits, zumindest sinngemäß, im Zusammenhang mit dem erfindungsgemäßen Verfahren näher erläutert, so dass zur Vermeidung von Wiederholungen an dieser Stelle auf die entsprechenden Ausführungen hierzu verwiesen wird.

Nach einer bevorzugten Weiterbildung der erfindungsgemäßen Bearbeitungsmaschine kann diese wenigstens eine Messlanze umfassen. Die Messlanze weist einen Endabschnitt auf, in und/oder an dem der Sensor zur Messung der Temperatur des Materials angeordnet ist. Alternativ oder ergänzend weist die Messlanze einen im Bereich ihres Endabschnitts gelegenen oder sich an diesen anschließenden Abschnitt auf, in und/oder an dem der Sensor zur Messung der Feuchte des Materials angeordnet ist.

Weiter ist die Erfindung auf ein Bearbeitungssystem gerichtet, welches zur Durchführung des erfindungsgemäßen Verfahrens dient. Hierzu umfasst das Bearbeitungssystem eine Bearbeitungsmaschine mit wenigstens einem onboard-Sensor und eine Maschinensteuerung sowie eine mit der Maschinensteuerung der Bearbeitungsmaschine zumindest indirekt kommunizierende Materialmanagementsoftware. Bei der Bearbeitungsmaschine kann es sich bevorzugt um die erfindungsgemäße Bearbeitungsmaschine handeln.

Der sich aus dem erfindungsgemäßen Bearbeitungssystem ergebende Vorteil wurde bereits, zumindest sinngemäß, im Zusammenhang mit dem erfindungsgemäßen Verfahren näher erläutert, so dass zur Vermeidung von Wiederholungen an dieser Stelle ebenfalls auf die entsprechenden Ausführungen hierzu verwiesen wird.

Nach einer bevorzugten Weiterbildung des erfindungsgemäßen Bearbeitungssystems kann dieses wenigstens einen externen Sensor besitzen, welcher dazu eingerichtet ist, zumindest unidirektional mit der Materialmanagementsoftware zu kommunizieren.

Insgesamt ermöglicht der Gegenstand der vorliegenden Erfindung die automatisierte Erfassung und Auswertung materialspezifischer Daten sowie die Regelung von Stellgrößen im Arbeitsprozess. Weiter ermöglicht dieser die automatisierte Erfassung und Auswertung der Daten zur Erkennung von Anomalien nebst der Ableitung von Handlungsempfehlungen hieraus. Einen weiteren Vorteil bildet der lernfähige Algorithmus auf Basis der Verknüpfung und Auswertung historischer Daten im Kontext mit historischen Handlungen. Die Erfindung ermöglicht die unmittelbare Einregelung von Parametern auf Basis von Soll-Werten sowie Mieten- und Maschinenparametern während des Umsetzens des Materials. Nicht zuletzt ermöglicht die Erfindung nun auch die automatisierte Zuordnung der Messdaten sowohl zu definierten Orten und Zeitpunkten als auch zu definierten Materialchargen.

Die Erfindung wird nachfolgend anhand eines beispielhaften und schematisch dargestellten Ablaufs des Verfahrens sowie eines schematisch dargestellten Ausführungsbeispiels näher erläutert. Es zeigen:
- Figur 1 -: ein Ablaufdiagramm zur Darstellung des erfindungsgemäßen Verfahrens am Beispiel einer Bewässerung des Materials und
- Figur 2 -: eine erfindungsgemäße Bearbeitungsmaschine in einer Frontansicht.

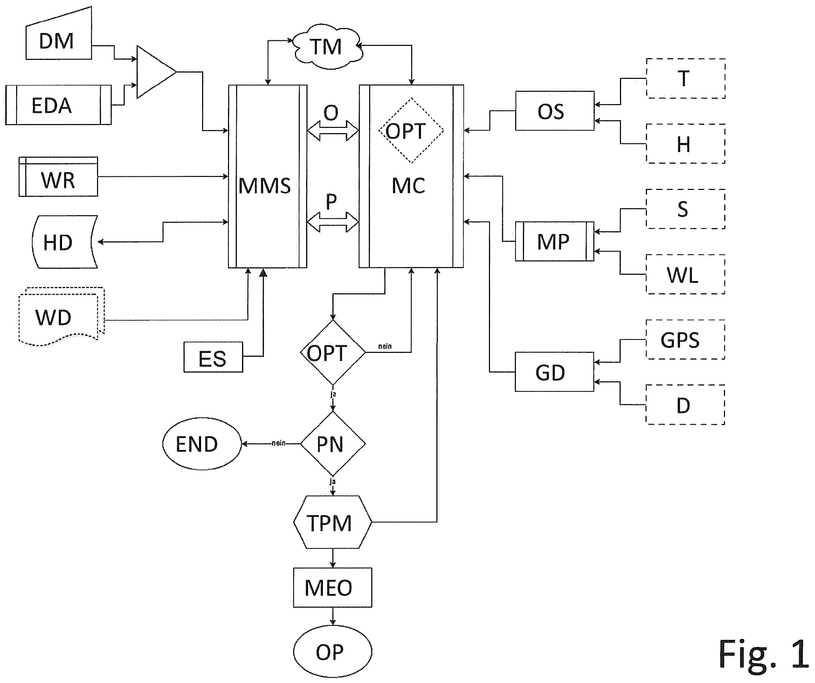

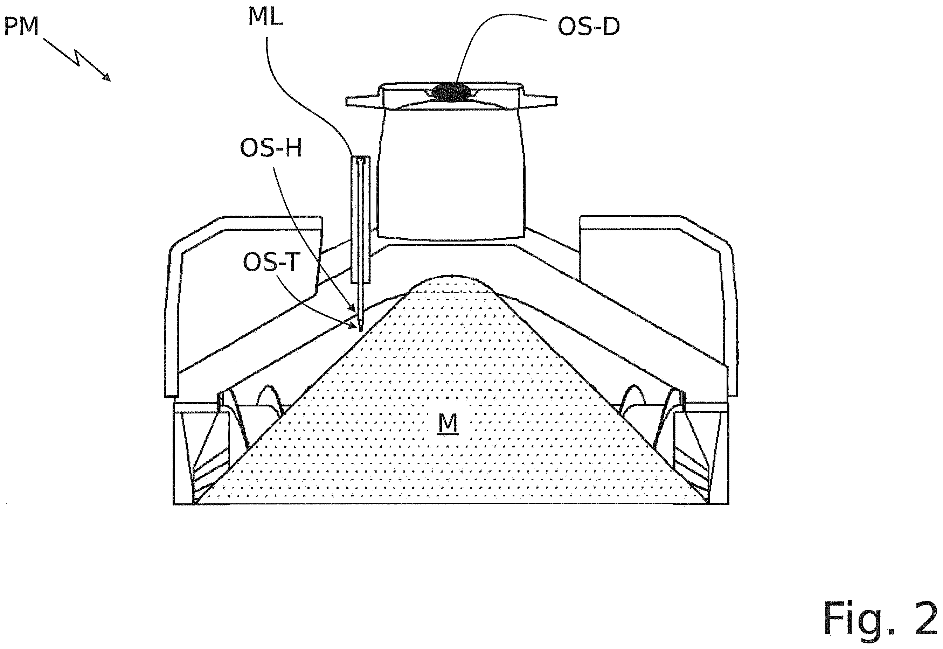

Figur 1 zeigt ein Ablaufdiagramm, welches das erfindungsgemäße Verfahren am Beispiel einer Bewässerung des Materials darstellt. Herzstück des erfindungsgemäßen Bearbeitungssystems bilden eine Materialmanagementsoftware MMS, welche auch als "Materialmanager" bezeichnet werden kann, sowie eine Maschinensteuerung MC und eine hier nicht näher erkennbare Bearbeitungsmaschine PM (s. Fig. 2). Erkennbar kommunizieren die Materialmanagementsoftware MMS und die Maschinensteuerung MC untereinander, wie durch eine bidirektionale, bevorzugt drahtlose, Kommunikation (Telematic) TM angedeutet.

Die Materialmanagementsoftware MMS erhält und/oder archiviert eine Reihe von Daten DM, EDA, WR, HD, WD, bei denen es sich um manuell erfasste Prozessdaten DM, externe Prozessdaten aus automatischer Erfassung EDA und Daten zum Arbeitsbereich WR sowie historische Daten HD und sonstige Daten, wie beispielsweise Wetterdaten WD, handelt. Die Daten EDA und DM können beispielsweise über einen externen Sensor ES erfasst werden. Auf Basis dieser Daten leitet die Materialmanagementsoftware MMS mindestens eine die Behandlung des Materials M betreffende Maßnahme ab. Unter Arbeitsbereich WR wird insbesondere der Bereich verstanden, in welchem das Handling und die Bearbeitung des zu bearbeitenden Materials erfolgt. In erster Linie können das die Flächen sein, in denen sich Mieten befinden, aber auch Lagerflächen und dergleichen, in welchen ein Materialhandling stattfindet, beispielsweise die Anfahrt und Abfuhr des Materials. In dem hier beispielhaft gezeigten Fall beinhaltet die Maßnahme einen Soll-Wert für die Bewässerung des Materials M. Die Bewässerungsmaßnahme wird anschließend beispielsweise zusammen mit der Maßnahme "Umsetzen des Materials" in Form eines durchzuführenden Auftrags O an die Maschinensteuerung MC der Bearbeitungsmaschine PM übermittelt. Die Maschinensteuerung MC selbst erhält eine Vielzahl an aktuellen Daten T, H, S, WL, GPS, D. Die Daten T, H, S, WL, GPS, D beinhalten die über einen onboard-Sensor OS erfasste Temperatur T des Materials sowie die über einen weiteren onboard-Sensor OS erfasste Feuchte H des Materials. Weiter liegen der Maschinensteuerung MC Daten in Form von Maschinenparametern MP vor, bei denen es sich beispielsweise um die Geschwindigkeit S und die Auslastung WL der Maschine PM handeln kann. Zudem erhält die Maschinensteuerung MC geometrische Daten GD, welche die Position GPS der Maschine PM und die Abmessungen D des Materials M beinhalten. Die Messwerte der onboard-Sensoren OS werden während der Behandlung des Materials M erfasst. Durch eine entsprechende Regelung der Maschinensteuerung MC wird dabei überprüft, ob die Betriebsparameter im Soll sind OPT. Dies geschieht durch einen Vergleich der Ist- und Soll-Werte, woraufhin bei Bedarf eine Anpassung von Maschinenparametern erfolgen kann. Dies kann beispielsweise die Menge des Eintrags an Wasser durch die Maschine PM ins Material M und/oder den Bereich des Wassereintrags in das Material M betreffen. Eine weitere Behandlung PN ist nicht mehr notwendig, sobald die Soll-Werte erreicht sind, so dass die Behandlung beendet END werden kann. Ansonsten erfolgt die Übergabe der Parameter TPM an die Bearbeitungsmaschine PM und diese führt den Auftrag O weiter aus MEO, um einen optimierten Prozess OP zu erhalten. Ein lernfähiger Algorithmus verknüpft die Daten und plant die weitere Behandlung. Der ausgeführte Auftrag O wird in Form eines Protokolls P protokolliert und von der Maschinensteuerung MC an die Materialmanagementsoftware MMS übermittelt und dort archiviert.

Figur 2 zeigt eine Frontansicht auf eine Bearbeitungsmaschine PM. Erkennbar handelt es sich hierbei beispielhaft um eine mobile Umsetzmaschine. Die Bearbeitungsmaschine PM ist über dem zu einer Miete aufgeschichteten Material M angeordnet. An der Bearbeitungsmaschine PM ist eine Messlanze ML vorgesehen, welche derart beweglich angeordnet ist, dass diese zumindest teilweise in das Material M hinein und wieder aus diesem heraus verlagerbar ist. Die Messlanze ML weist einen Endabschnitt auf, in und/oder an dem der Sensor OS-T zur Messung der Temperatur T des Materials M angeordnet ist. Zudem weist die Messlanze ML einen im Bereich ihres Endabschnitt gelegenen oder sich an diesen anschließenden Abschnitt auf, in und/oder an dem der Sensor OS-H zur Messung der Feuchte H des Materials M angeordnet ist. Vorzugsweise in einem oberen Bereich der Bearbeitungsmaschine PM ist ein weiterer, insbesondere optischer Sensor OS-D zur Messung der Abmessungen D, insbesondere des Querschnitts und/oder Volumens des geschichteten Materials M angeordnet. Bei diesem Sensor OS-D kann es sich beispielsweise um einen 2D-Laser handeln.

### Bezugszeichenliste:

- D -: Abmessungen von M
- DM -: manuelle Erfassung von Prozessdaten
- EDA -: externe Prozessdaten aus automatischer Erfassung
- END -: Ende
- ES -: externer Sensor
- GD -: geometrische Daten
- GPS -: Positionsbestimmung von PM
- H -: Feuchte des Materials M
- HD -: historische Daten
- M -: Material
- MC -: Maschinensteuerung
- MEO -: PM führt Arbeitsauftrag aus
- ML -: Messlanze von PM
- MMS -: Materialmanagementsoftware
- MP -: Parameter von PM
- O -: Auftrag
- OP -: optimierter Prozess
- OPT -: Betriebsparameter im SOLL?
- OS -: onboard Materialsensorik
- OS-D -: onboard-Sensor zur Messung von D
- OS-H -: onboard-Sensor zur Messung von H
- OS-T -: onboard-Sensor zur Messung von T
- P -: Protokoll
- PM -: Bearbeitungsmaschine
- PN -: Bearbeitung notwendig?
- S -: Geschwindigkeit von PM
- T -: Temperatur von M
- TM -: Telematic zwischen MMS und MC
- TPM -: Übergabe Parameter an PM
- WD -: Wetterdaten
- WL -: Auslastung von PM
- WR -: Arbeitsbereich

## Patentansprüche

1. Verfahren zur aeroben Behandlung eines schichtbaren organikhaltigen Materials (M) mit einer Bearbeitungsmaschine (PM), vorzugsweise mobile Umsetzmaschine, oder einem eine solche Bearbeitungsmaschine (PM) umfassenden Bearbeitungssystem, wobei bei dem Verfahren auf Basis von Daten (DM, EDA, WR, HD, WD, T, H, S, WL, GPS, D) zumindest eine die Behandlung des Materials (M) betreffende Maßnahme abgeleitet wird, wobei die so abgeleitete/n Maßnahme/n in Form eines durchzuführenden Auftrags (O) an eine Maschinensteuerung (MC) der Bearbeitungsmaschine (PM) übermittelt wird/werden und die Durchführung der Maßnahme/n durch die Bearbeitungsmaschine (PM) wenigstens teilweise automatisch, bevorzugt vollautomatisch erfolgt.

2. Verfahren nach Anspruch 1,
**dadurch gekennzeichnet,**
**dass** die automatische Durchführung der im Auftrag (O) enthaltenen Maßnahme/n erst nach einer vorherigen manuellen Freigabe erfolgt.

3. Verfahren nach Anspruch 1 oder 2,
**dadurch gekennzeichnet,**
**dass** der, insbesondere jeweilige Auftrag (O) an die Maschinensteuerung (MC) durch eine Materialmanagementsoftware (MMS) erstellt wird, welche dazu eingerichtet ist, wenigstens eine, vorzugsweise alle, der folgenden Aufgaben zu erfüllen:
- Archivierung von aktuellen Daten (DM, EDA, WR, T, H, S, WL, GPS, D), insbesondere mindestens eines durch wenigstens einen Sensor (OS, OS-T, OS-H, OS-D, ES) erfassten Ist-Werts eines Prozessparameters;
- Archivierung historischer Daten (HD), insbesondere mindestens eines durch wenigstens einen Sensor (OS, OS-T, OS-H, OS-D, ES) erfassten älteren Ist-Werts eines Prozessparameters;
- Auswertung und/oder Vergleich aktueller Daten (DM, EDA, WR, T, H, S, WL, GPS, D) und historischer Daten (HD), insbesondere zum Zwecke der Ableitung einer Maßnahme;
- Berücksichtigung aktueller und/oder prognostizierter Wetterdaten (WD), insbesondere zum Zwecke der Ableitung einer Maßnahme;
- Archivierung von dem jeweiligen Material (M) betreffenden Daten, insbesondere Materialart und/oder Materialmenge und/oder Materialdichte;
- Archivierung und ggf. Berücksichtigung von den Daten (DM, EDA, WR, HD, WD, T, H, S, WL, GPS, D) zugehörigen Daten in Form von Metadaten, insbesondere Erfassungsdatum und/oder Erfassungsort und/oder Sensortyp und/oder Messauflösung und/oder Messeinheit und/oder Kalibrierungsstatus und/oder Messmethode und/oder Umgebungsbedingungen und/oder Datenquelle und/oder durchgeführte Handlung;
- gesetzeskonforme Dokumentation von Daten (DM, EDA, WR, HD, WD, T, H, S, WL, GPS, D), vorzugsweise mindestens der jeweiligen Temperatur (T) des Materials (M), insbesondere mitsamt den zugehörigen Metadaten;
- Ableitung einer Maßnahme, insbesondere auf Basis der Daten (DM, EDA, WR, HD, WD, T, H, S, WL, GPS, D), mittels einer festgelegten Logik;
- Ableitung einer Maßnahme, insbesondere auf Basis der Daten (DM, EDA, WR, HD, WD, T, H, S, WL, GPS, D), mittels eines lernfähigen Algorithmus und/oder künstlicher Intelligenz, insbesondere anhand einer Verknüpfung und/ oder Auswertung historischer Daten (HD) im Zusammenhang mit historischen Handlungen;
- Ableitung einer nur einen Teil des Materials (M) betreffenden Maßnahme, insbesondere auf Basis der Daten (DM, EDA, WR, HD, WD, T, H, S, WL, GPS, D), aufgrund einer erkannten Prozessabweichung;
- Prognose des Behandlungsfortschritts des Materials (M) durch Erfassen seines Volumens oder/und seiner Masse durch wenigstens einen Sensor (OS-D, ES);
- Vorhersage der Verfügbarkeit des endbehandelten Materials (M) durch Erfassen seines Volumens oder/und seiner Masse durch wenigstens einen Sensor (OS-D, ES);
- Verwaltung eines zur temporären Lagerung des Materials (M) vorgesehenen Bereichs, insbesondere Platzmanagement;
- Planung anstehender Behandlungen des Materials (M), insb. auf Basis der zugehörigen Daten (DM, EDA, WR, HD, WD, T, H, S, WL, GPS, D);
- Planung von der Logistik des Materials (M) betreffenden Prozesse, insbesondere in Bezug auf den Transport und/ oder die Lagerung und/oder die Verteilung des Materials (M) ;
- Protokollierung des durchgeführten Auftrags (O) oder der durchgeführten Aufträge.

4. Verfahren nach einem der vorhergehenden Ansprüche,
**dadurch gekennzeichnet,**
**dass** die Maschinensteuerung (MC) eine Regelung umfasst und dazu eingerichtet ist, wenigstens eine, vorzugsweise alle, der folgenden Aufgaben automatisiert zu erfüllen:
- Umsetzung wenigstens eines Teils des Materials (M);
- Bewässerung wenigstens eines Teils des Materials (M);
- autonome Bewegung der Bearbeitungsmaschine (PM);
- Verarbeitung von der jeweiligen Position der Bearbeitungsmaschine (PM) betreffenden Informationen;
- Verarbeitung von der Form und/oder Abmessungen des geschichteten Materials (M) betreffenden Informationen;
- Vermeidung einer Kollision der Bearbeitungsmaschine (PM) mit dem Material (M) und/oder einem deren Einsatz betreffenden Gegenstand;
- Anpassung der Fahrgeschwindigkeit der Bearbeitungsmaschine (PM);
- Anpassung der Drehzahl eines zur Umsetzung des Materials (M) dienenden Rotors der Bearbeitungsmaschine (PM) ;
- Anpassung weiterer Maschinenparameter, insb. Anpassung der Höhe des Rotors der Bearbeitungsmaschine oder Anpassung der Stellung der Heckklappe der Bearbeitungsmaschine zur Variation des Materialauswurfs.

5. Verfahren nach einem der vorhergehenden Ansprüche,
**dadurch gekennzeichnet,**
**dass** die oder wenigstens eine der im an die Maschinensteuerung (MC) übermittelten Auftrag (O) enthaltene/n Maßnahme/n während der Durchführung des Auftrags (O) durch die Bearbeitungsmaschine (PM) auf Basis von durch wenigstens einen Sensor (OS, OS-T, OS-H, OS-D, ES) erfassten Daten (DM, EDA, WR, HD, WD, T, H, S, WL, GPS, D), insb. durch eine Regelung der Maschinensteuerung (MC), dynamisch angepasst wird.

6. Verfahren nach einem der vorhergehenden Ansprüche,
**dadurch gekennzeichnet,**
**dass** auf Basis einer Auswertung der Daten (DM, EDA, WR, HD, WD, T, H, S, WL, GPS, D) eine Anomalie in Bezug auf den aktuellen Behandlungszustand des Materials (M) erkannt und eine die weitere Behandlung des Materials (M) betreffende Maßnahme abgeleitet wird.

7. Bearbeitungsmaschine (PM), insbesondere zur Durchführung des Verfahrens nach einem der vorhergehenden Ansprüche, mit wenigstens einem onboard-Sensor (OS) zur Messung mindestens einer der nachfolgenden Ist-Werte:
- Temperatur (T) des Materials (M);
- Feuchte (H) des Materials (M);
- Anteil eines Gases innerhalb oder im Bereich des Materials (M), insbesondere Kohlendioxid (CO₂) und/ oder Sauerstoff (O₂) und/oder Ammoniak (NH₃) und/ oder Methan (CH₄);
- Abmessungen (D), insbesondere Querschnitt und/oder Volumen, des geschichteten Materials (M);
- Korngröße des geschichteten Materials (M);
- Homogenität des geschichteten Materials (M).

8. Bearbeitungsmaschine (PM) nach Anspruch 7,
**dadurch gekennzeichnet,**
**dass** wenigstens eine Messlanze (ML) vorgesehen ist, welche einen Endabschnitt aufweist, in und/oder an dem der Sensor (OS-T) zur Messung der Temperatur des Materials (M) angeordnet ist, wobei die Messlanze (ML) einen im Bereich ihres Endabschnitt gelegenen oder sich an diesen anschließenden Abschnitt aufweist, in und/ oder an dem der Sensor (OS-H) zur Messung der Feuchte des Materials (M) angeordnet ist.

9. Bearbeitungssystem zur Durchführung des Verfahrens nach einem der Ansprüche 1 bis 6, umfassend eine Bearbeitungsmaschine (PM) nach Anspruch 7 mit wenigstens einem onboard-Sensor (OS, OS-T, OS-H, OS-D) und einer Maschinensteuerung (MC) sowie einer mit der Maschinensteuerung (MC) der Bearbeitungsmaschine (PM) zumindest indirekt kommunizierenden Materialmanagementsoftware (MMS).

10. Bearbeitungssystem nach Anspruch 9,
**dadurch gekennzeichnet,**
**dass** wenigstens ein externer Sensor (ES) vorgesehen ist, welcher dazu eingerichtet ist, zumindest unidirektional mit der Materialmanagementsoftware (MMS) zu kommunizieren.
